# EUROPEAN PATENT APPLICATION

(11) **EP 2 785 004 A1**
(43) Date of publication of application: **01.10.2014**
(21) Application number: 13161622.9
(22) Date of filing: 28.03.2013
(51) Int. Cl.: H04L 29/06, H04W 12/08

(54) **Imei based lawful interception for ip multimedia subsystem**

(71) Applicant: Nokia Solutions and Networks Oy, 02610 Espoo (FI)
(72) Inventor: Milinski, Alexander, 81371 München (DE); Janko, Andras, H2030 Érd (HU)
(74) Representative: Borgström, Markus

(57) **Abstract**

The present invention addresses method, apparatus and computer program product for enabling International Mobile Equipment Identifier based Lawful Interception for Internet Protocol IP Multimedia Subsystem, VoLTE and beyond systems. Thereby, an International Mobile Equipment Identifier allocated to a User Equipment and verified by an Evolved Packet Core is transmitted from a Mobility Management Entity to a Packet Gateway, the International Mobile Equipment Identifier is transmitted to a Proxy Call State Control Function via Policy and Charging Rules Function within the Policy and Charging Control procedures at Internet Protocol Multimedia Subsystem registration, and the International Mobile Equipment Identifier is transmitted to a Serving Call State Control Function at call set-up.

## Description

### Field of the invention

The present invention generally relates to wireless communication networks, and more specifically relates to a method, apparatus and computer program product for enabling International Mobile Equipment Identifier IMEI based Lawful Interception for Internet Protocol IP Multimedia Subsystem and Voice over Long Term Evolution LTE™.

### Background

Mobile data transmission and data services are constantly making progress, wherein such services provide various communication services, such as voice, video, packet data, messaging, broadcast, etc. In recent years, Long Term Evolution LTE™ has been specified, which uses the Evolved Universal Terrestrial Radio Access Network E-UTRAN as radio communication architecture.

Lawful interception LI in telecommunication networks is required by law in most countries of the world. The operator is not allowed to offer telecommunication services without providing Lawful Interception possibilities to the respective Law Enforcement Agencies (LEA). It is required by law to intercept the complete traffic a subject sends/receives, i.e. both the signaling traffic and the bearer traffic. This generally applies to all kinds of networks and communication systems.

According to 3GPP standardization, the Lawful Interception LI architecture is currently specified in 3GPP TS33.107 V8.3.0 and in 3GPP TS 33.108 V8.3.0. These standards define that every involved network performs Lawful Interception. In particular, the access network (e.g. the circuit switched domain network) supervises the subscriber identities defined in the access network (in the packet domain e.g. MSISDN (Mobile Subscriber Integrated Service Digital Network identifier), IMSI (International Mobile Subscriber Identity), or IMEI (International Mobile Equipment Identity)) and intercepts the access network's traffic including both signaling and bearer traffic, and the core network (e.g. the IMS core network) supervises the subscriber identities defined in the core network (in the IMS e.g. SIP URI/URL (Session Initiation Protocol Uniform Resource Locator) or Tel URL (Telephone Uniform Resource Locator)) and intercepts the core network's signaling traffic (in the IMS e.g. IMS SIP (Session Initiation Protocol) signaling traffic).

An IMS network and specifically the serving call state control function S-CSCF, which is responsible for interception of signaling IRI, are not always aware of the IMEI used by a subscriber. Note that the IMEI may change when the user changes his phone by swapping the subscriber identity module SIM. Thus the IMEI cannot be stored as part of the subscriber profile.

More specifically, the IMEI may be optionally available in session initiation protocol SIP registration signaling as supplied by a User Equipment UE. In the most important VoLTE use case, the IMEI may be available in SIP registration signaling from the UE as instance ID. The IMEI is not available in call set-up signaling.

However, the only source of the IMEI is the respective UE. Information of the UE is usually not trusted. If the LI target is able to manipulate the SIP signaling stack here, avoidance of LI may be enabled.

So far, the IMS has no means to verify the IMEI sent by the UE.

Hence, since more and more regulators mandate Lawful Interception based on the International Mobile Equipment Identifier IMEI, which identifies the mobile terminal used (rather than the subscription), there is a need for enabling IMEI based Lawful Interception for IP multimedia subsystem IMS and Voice over LTE™ VoLTE as example of a IMS based system.

### Summary of the Invention

Therefore, in order to overcome the drawbacks of the prior art, it is an object underlying the present invention to provide IMEI based Lawful Interception for IP multimedia subsystem.

In particular, it is an object of the present invention to provide a method, apparatus and computer program product for enabling International Mobile Equipment Identifier IMEI based Lawful Interception for Internet Protocol IP Multimedia Subsystem.

According to a first aspect of the present invention, there is provided a method, comprising causing transmission of an International Mobile Equipment Identifier allocated to a User Equipment and verified by a Evolved Packet Core from a Mobility Management Entity to a Packet Gateway, causing transmission of the International Mobile Equipment Identifier to a Proxy Call State Control Function via Policy and Charging Rules Function within the Policy and Charging Control procedures at Internet Protocol Multimedia Subsystem registration, and causing transmission of the International Mobile Equipment Identifier to a Serving Call State Control Function at call set-up.

According to a second aspect of the present invention, there is provided an apparatus, which comprises first transmission means adapted to cause transmission of an International Mobile Equipment Identifier allocated to a User Equipment and verified by a Evolved Packet Core from a Mobility Management Entity to a Packet Gateway, second transmission means adapted to cause transmission of the International Mobile Equipment Identifier to a Proxy Call State Control Function via Policy and Charging Rules Function within the Policy and Charging Control procedures at Internet Protocol Multimedia Subsystem registration, and third transmission means adapted to cause transmission of the International Mobile Equipment Identifier to a Serving Call State Control Function at call set-up.

According to a third aspect of the present invention, there is provided a computer program product comprising computer-executable components which, when the program is run, are configured to carry out the method according to the first aspect.

Advantageous further developments or modifications of the aforementioned exemplary aspects of the present invention are set out in the dependent claims.

### Brief description of drawings

For a more complete understanding of example embodiments of the present invention, reference is now made to the following descriptions taken in connection with the accompanying drawings in which:
Fig. 1 illustrates a method according to certain embodiments of the invention;
Fig. 2 schematically illustrates an apparatus according to certain embodiments of the invention;
Fig. 3 schematically shows the call flow details of the attachment to evolved packet core EPC procedure according to an exemplary implementation according to certain embodiments of the present invention;
Fig. 4 schematically shows the call flow details of the IMS registration procedure according to an exemplary implementation according to certain embodiments of the present invention; and
Fig. 5 schematically shows the call flow details of the call setup procedure according to an exemplary implementation according to certain embodiments of the present invention.

### Description of exemplary embodiments

Exemplary aspects of the present invention will be described herein below. More specifically, exemplary aspects of the present invention are described hereinafter with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. Namely, the present invention and its embodiments are mainly described in relation to 3GPP specifications being used as non-limiting examples for certain exemplary network configurations and deployments. As such, the description of exemplary embodiments given herein specifically refers to terminology which is directly related thereto. Such terminology is only used in the context of the presented non-limiting examples, and does naturally not limit the invention in any way. Rather, any other network configuration or system deployment, etc. may also be utilized as long as compliant with the features described herein.

Hereinafter, various embodiments and implementations of the present invention and its aspects or embodiments are described using several alternatives. It is generally noted that, according to certain needs and constraints, all of the described alternatives may be provided alone or in any conceivable combination (also including combinations of individual features of the various alternatives).

According to certain embodiments of the present invention, the verification of the IMEI as done by the Mobility Management Entity MME in the Evolved Packet Core EPC is reused to verify the user in the IMS.

That is, existing interfaces and messages within the EPC, within the IMS and between EPC and IMS may be reused.

More specifically, according to certain embodiments of the present invention, the IMEI as verified by the EPC in the MME is transferred from MME to Packet Gateway PGW, stored there, communicated to the Proxy Call State Control Function P-CSCF via Policy and Charging Rules Function PCRF within the Policy and Charging Control PCC procedures at IMS registration, stored in the P-CSCF and sent to the Serving Call State Control Function S-CSCF at call set-up in the INVITE or response depending on direction of call set-up.

According to certain embodiments, the P-CSCF and/or S-CSCF may also compare the IMEI as provided by the EPC with the IMEI provided by the UE and e.g. reject any signaling if the two values don't match.

According to further embodiments of the present invention, an early check is provided to verify that the IMEI value provided as instance-ID indeed has the format and semantics of an IMEI. Optionally, the P-CSCF or S-CSCF may reject the registration, if the instance-ID does not provide a value at all or a value not matching the defined IMEI format.

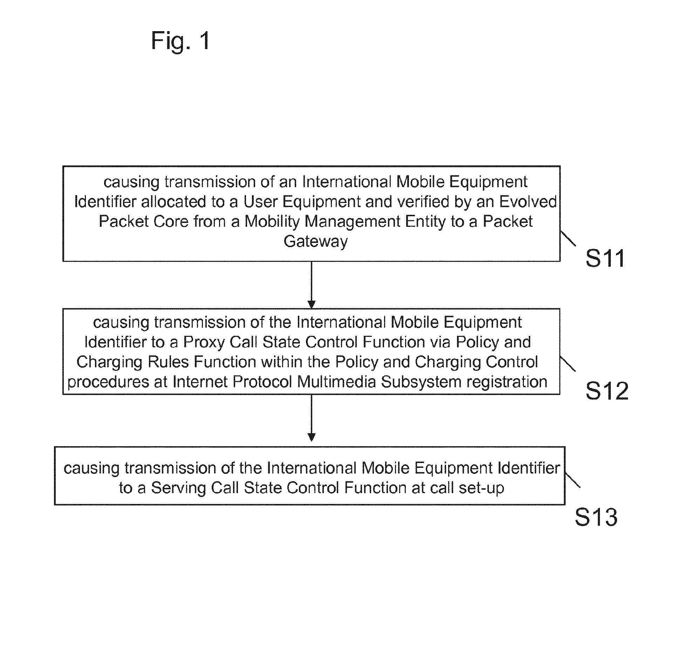

Fig. 1 shows a principle flowchart of an example for a method according to certain embodiments of the present invention.

In Step S11, transmission of an International Mobile Equipment Identifier allocated to a User Equipment and verified by an Evolved Packet Core from a Mobility Management Entity to a Packet Gateway is caused.

In Step S12, transmission of the International Mobile Equipment Identifier to a Proxy Call State Control Function via Policy and Charging Rules Function within the Policy and Charging Control procedures at Internet Protocol Multimedia Subsystem registration is caused.

In Step 13, transmission of the International Mobile Equipment Identifier to a Serving Call State Control Function at call set-up is caused.

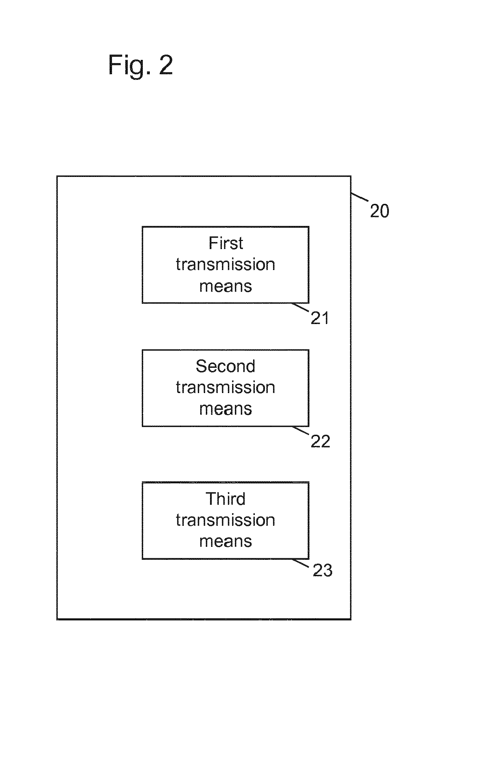

Fig. 2 shows a principle configuration of an example for an apparatus according to certain embodiments of the present invention. The apparatus 20 comprises a first transmission means 21 adapted to cause transmission of an International Mobile Equipment Identifier allocated to a User Equipment and verified by an Evolved Packet Core from a Mobility Management Entity to a Packet Gateway, second transmission means 22 adapted to cause transmission of the International Mobile Equipment Identifier to a Proxy Call State Control Function via Policy and Charging Rules Function within the Policy and Charging Control procedures at Internet Protocol Multimedia Subsystem registration, and third transmission means 23 adapted to cause transmission of the International Mobile Equipment Identifier to a Serving Call State Control Function at call set-up.

As regards the advantages provided by the present invention, it is provided a verified IMEI for Lawful Interception in IMS solely based on existing interfaces and signaling messages.

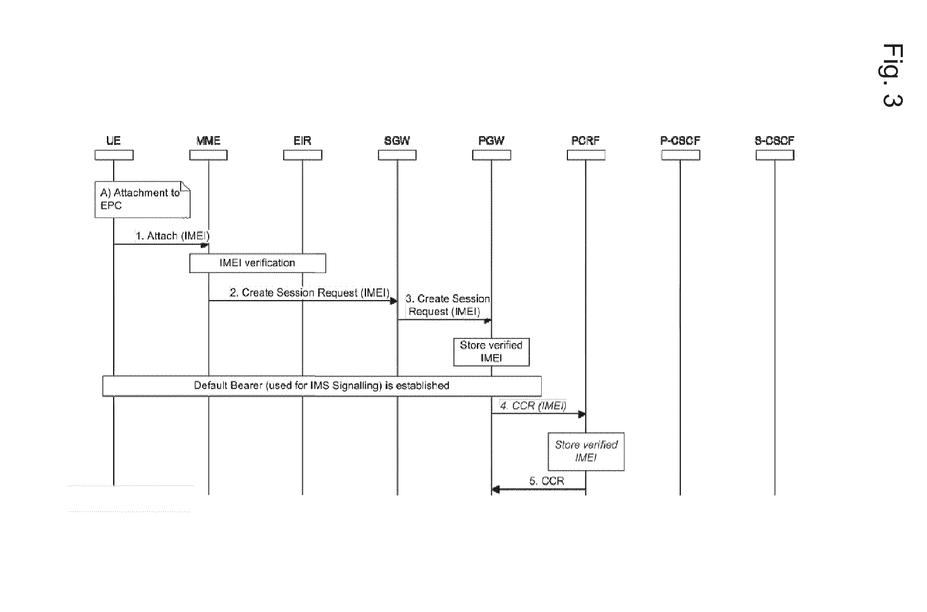

Figs. 3 to 5 schematically show the call flow details of an exemplary implementation according to certain embodiments of the present invention. In Figs. 3 to 5, new and/or modified messages or elements are highlighted in bold and italic letters.

Fig. 3 schematically shows the call flow details of the attachment to evolved packet core EPC procedure (A) according to an exemplary implementation according to certain embodiments of the present invention.

In particular, in step 1, a User Equipment UE transmits an attach message which comprises the UE's IMEI to the Mobility Management Entity MME.

After IMEI verification by the Mobility Management Entity MME and the Equipment Identity Register EIR, in step 2, a Create Session Request comprising the IMEI is transmitted from the MME to the Serving Gateway SGW.

Then, in step 3, a Create Session Request comprising the IMEI is forwarded from the SGW to the Packet Gateway PGW, and the verified IMEI is stored in the PGW.

Thereby, by the above steps performed by UE, MME, EIR, SGW and/or PGW, a default bearer used for IMS signaling is established.

Hence, in step 4, at establishment of the default bearer, which, in case of IMS Access Point Name APN, is the bearer used for IMS signaling, the PCRF is informed about the connection by a credit control request CCR message. According to certain embodiments of the present invention, the IMEI is attached to the CCR, which has been verified in the EPC before. Then, the PCRF stores the verified IMEI.

Then, in step 5, a credit control request answer CCA is transmitted from the PCRF to the PGW.

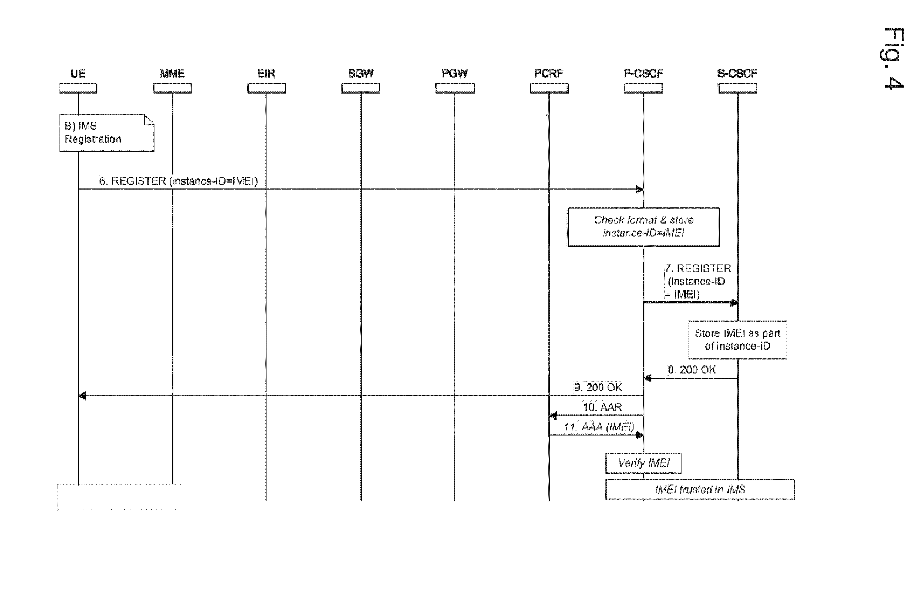

Fig. 4 schematically shows the call flow details of the IMS registration (B) procedure according to an exemplary implementation according to certain embodiments of the present invention.

In step 6, an IMS REGISTER message is transmitted from the UE to the Proxy Call State Control Function. The IMS REGISTER message contains the IMEI in the Session Initiation Protocol SIP instance-ID header field.

According to certain embodiments of the present invention the P-CSCF stores the IMEI in order to verify it later. At this point, the P-CSCF - as a configurable option - may perform a syntax check to verify that the instance-ID is provided and that the instance-ID value is in IMEI format. The P-CSCF may reject the registration otherwise.

In step 7, the REGISTER message is forwarded from P-CSCF to Serving Call State Control Function S-CSCF, and the IMEI is stored as part of instance ID in the S-CSCF.

Then, in step 8, the S-CSCF transmits a 200 OK message to P-CSCF, and in step 9, a 200 OK message is transmitted from the P-CSCF to UE.

Further, in step 10, an Authentication and Authorization Request AAR message is transmitted from P-CSCF to PCRF, and in turn, in step 11, an Authentication and Authorization Answer AAA message, which comprises the IMEI, is transmitted to from PCRF to P-CSCF.

In particular, after successful IMS registration, the P-CSCF interacts with the PCRF e.g. to subscribe to notifications regarding the signaling bearer. According to certain embodiments of the present invention, the AAA message (answer to AAR) is accompanied with the IMEI stored by the PCRF before. The P-CSCF may now compare the stored IMEI value with the verified IMEI as received from the PCRF. If both values do not match, the P-CSCF initiates a network initiated session release because of the mismatch. If both values match the IMEI sent in the SIP INVITE before becomes a trusted IMEI in IMS, which can be used for LI in P-CSCF and S-CSCF in the following.

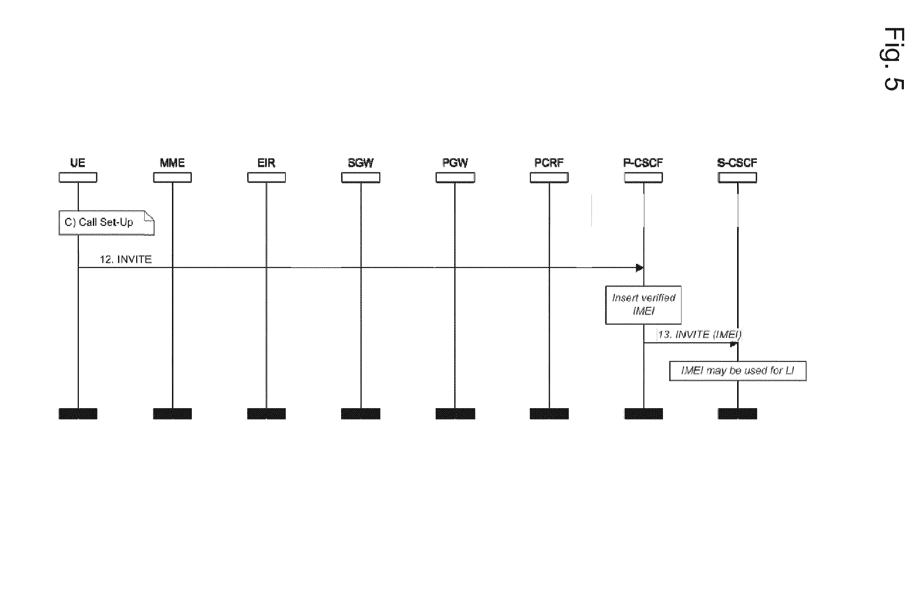

Fig. 5 schematically shows the call flow details of the call setup procedure according to an exemplary implementation according to certain embodiments of the present invention.

In step 12, an INVITE message is transmitted from the UE to P-CSCF. According to certain embodiments of the present invention, at session set-up, the P-CSCF may insert the verified IMEI to the INVITE (for originating sessions) or in the first response to the INVITE.

Thereby, it is to be noted that this step is not needed for the illustrated case where the IMEI was provided in the instance-ID of REGISTER. But it makes the IMEI available where the SIP stack of the UE does not provide the IMEI.

According to certain embodiments of the present invention, the verification of the IMEI as done by the MME in the EPC is reused to verify the user in the IMS. Thereby, existing interfaces and messages within the EPC, within the IMS and between EPC and IMS may be reused. The present invention also enables an early check to verify that the IMEI value provided as instance-ID has the format and semantics of an IMEI.

It is to be noted that embodiments of the present invention may be implemented as circuitry, in software, hardware, application logic or a combination of software, hardware and application logic. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer or smart phone, or user equipment.

As used in this application, the term "circuitry" refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

The present invention relates in particular but without limitation to mobile communications, for example to environments under LTE™ or LTE-Advanced, and can advantageously be implemented also in controllers, base stations, user equipments or smart phones, or personal computers connectable to such networks. That is, it can be implemented e.g. as/in chip-sets to connected devices.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The following meanings for the abbreviations used in this specification apply:

| | |
|---|---|
| APN | Access Point Name |
| CSCF | Call State Control Function |
| EIR | Equipment Identity Register |
| EPC | Evolved Packet Core |
| IMEI | International Mobile Equipment Identifier |
| IMS | IP Multimedia Subsystem |
| LI | Lawful Interception |
| MME | Mobility Management Entity |
| PCRF | Policy and Charging Rules Function |
| PGW | Packet Gateway |
| SGW | Serving Gateway |

## Claims

1. A method, comprising:
causing transmission of an International Mobile Equipment Identifier allocated to a User Equipment and verified by an Evolved Packet Core from a Mobility Management Entity to a Packet Gateway;
causing transmission of the International Mobile Equipment Identifier to a Proxy Call State Control Function via Policy and Charging Rules Function within the Policy and Charging Control procedures at Internet Protocol Multimedia Subsystem registration; and
causing transmission of the International Mobile Equipment Identifier to a Serving Call State Control Function at call set-up.

2. The method according to claim 1, further comprising storing the transmitted International Mobile Equipment Identifier in the Packet Gateway.

3. The method according to claim 1 or 2, further comprising storing the transmitted International Mobile Equipment Identifier in the Policy and Charging Rules Function.

4. The method according to any of claims 1 to 3, further comprising storing the transmitted International Mobile Equipment Identifier in the Proxy Call State Control Function.

5. The method according to any of claims 1 to 4, wherein the transmission of the International Mobile Equipment Identifier to the Proxy Call State Control Function is included in the Credit Control Request message.

6. The method according to any of claims 1 to 5, wherein the transmission of the International Mobile Equipment Identifier to the Serving Call State Control Function at call set-up is carried out in an INVITE message or response message depending on direction of call set-up.

7. The method according to any of claims 1 to 6, wherein the transmission of the International Mobile Equipment Identifier to the Policy and Charging Rules Function is included in the Authentication and Authorization Answer message.

8. The method according to any of claims 1 to 7, further comprising comparing the International Mobile Equipment Identifier as provided by the Evolved Packet Core with the International Mobile Equipment Identifier provided by the User Equipment by the Proxy Call State Control Function.

9. The method according to any of claims 1 to 8, further comprising comparing the International Mobile Equipment Identifier as provided by the Evolved Packet Core with the International Mobile Equipment Identifier provided by the User Equipment by the Serving Call State Control Function.

10. The method according to claim 8 or 9, further comprising rejecting any signaling if the two compared International Mobile Equipment Identifiers don't match.

11. An apparatus, comprising:
first transmission means adapted to cause transmission of an International Mobile Equipment Identifier allocated to a User Equipment and verified by an Evolved Packet Core from a Mobility Management Entity to a Packet Gateway;
second transmission means adapted to cause transmission of the International Mobile Equipment Identifier to a Proxy Call State Control Function via Policy and Charging Rules Function within the Policy and Charging Control procedures at Internet Protocol Multimedia Subsystem registration; and
third transmission means adapted to cause transmission of the International Mobile Equipment Identifier to a Serving Call State Control Function at call set-up.

12. The apparatus according to claim 11, further comprising first storing means adapted to store the transmitted International Mobile Equipment Identifier in the Packet Gateway.

13. The apparatus according to claim 11 or 12, further comprising second storing means adapted to store the transmitted International Mobile Equipment Identifier in the Policy and Charging Rules Function.

14. The apparatus according to any of claims 11 to 13, further comprising third storing means adapted to store the transmitted International Mobile Equipment Identifier in the Proxy Call State Control Function.

15. The apparatus according to any of claims 12 to 14, wherein the transmission of the International Mobile Equipment Identifier to the Proxy Call State Control Function is included in the Credit Control Request message.

16. The apparatus according to any of claims 12 to 15, wherein the transmission of the International Mobile Equipment Identifier to the Serving Call State Control Function at call set-up is carried out in an INVITE message or response message depending on direction of call set-up.

17. The apparatus according to any of claims 12 to 16, wherein the transmission of the International Mobile Equipment Identifier to the Policy and Charging Rules Function is included in the Authentication and Authorization Answer message.

18. The apparatus according to any of claims 12 to 17, further comprising comparing means adapted to compare the International Mobile Equipment Identifier as provided by the Evolved Packet Core with the International Mobile Equipment Identifier provided by the User Equipment by the Proxy Call State Control Function.

19. The apparatus according to any of claims 12 to 18, further comprising comparing means adapted to compare the International Mobile Equipment Identifier as provided by the Evolved Packet Core with the International Mobile Equipment Identifier provided by the user equipment by the Serving Call State Control Function.

20. The apparatus according to claim 18 or 19, further comprising rejecting means adapted to reject any signaling if the two compared International Mobile Equipment Identifiers don't match.

21. A computer program product comprising computer-executable components which, when the program is run, are configured to carry out the method according to any of claims 1 to 10.

22. The computer program product according to claim 21, wherein the computer program product comprises a computer-readable medium on which the software code portions are stored, or wherein the program is directly loadable into an internal memory of the processing device.
